# EUROPÄISCHE PATENTANMELDUNG

(11) **EP 0 904 689 A1**
(43) Veröffentlichungstag der Anmeldung: **31.03.1999**
(21) Anmeldenummer: 97115574.2
(22) Anmeldetag: 09.09.1997
(51) Int. Cl.: A01K 1/015

(54) **Holzpellets granuliert, als Streu für Kleintiere und Katzen**

(71) Anmelder: Koppelstätter, Gottfried, 4974 Ort im Innkreis (AT)
(72) Erfinder: Koppelstätter, Gottfried, 4974 Ort im Innkreis (AT)

(57) **Zusammenfassung**

Granulierte Holzpellets eignen sich als Streu für Kleintiere und Katzen, durch die gute Saugfähigkeit und Geruchsbindung, und vor allem durch die Kompostierbarkeit und geringer Schadstoffbelastung.

## Beschreibung

Die Erfindung bezieht sich auf granulierte Holzpellets als Hygienestreu für Kleintiere und Katzen.

Holzpellets aus Weichholz mit einem Durchmesser von 6mm und einer Länge bis 3cm und einem Raumgewicht von 600kg/m³ werden üblicherweise als Heizmaterial verwendet.

Gegenstand dieser Erfindung ist ein Streumaterial für Katzen und Kleintiere, das sowohl saugfähig, geruchsbindend als auch kompostierbar und schadstoffarm ist.

Erfindungsgemäß wird dies durch Verwendung von Holzpresslingen (Pellets) aus Weichholz mit einem Raumgewicht von ca. 400kg/m³ erreicht.

Erfindungsgemäße Holzpellets zur Verwendung als Streu für Kleintiere und Katzen, werden aus herkömmlichen Heizpellets durch zerkleinern mit Riffelwalzen hergestellt.

Erfindungsgemäße Holzpellets weisen verschiedene Vorteile auf. Das Streumaterial ist, bedingt durch die bei der Herstellung von Pellets notwendige Zerkleinerung des Ausgangsmaterial Holzspäne, enorm saugfähig und geruchsbindend. Durch die Pelletierung und Aussiebung wird ein Granulat (ca. 5mm Komgröße) mit geringem Staubanteil erzeugt.
Streu aus Holzpellets kann nach der Verwendung kompostiert werden.
Ein weiterer Vorteil ist die Verwendung von Holz als Ausgangsmaterial, zur Sicherstellung eines schadstoffarmen Produktes. Andere Materialien z.B. Stroh aus der landwirtschaftlichen Produktion kann mit Herbiziden, Wachstumsregulatoren, Fungiziden etc. behandelt sein.

## Patentansprüche

1. Kompostierbare Hygienestreu für Kleintiere und Katzen,
dadurch gekennzeichnet, daß als Streu
granulierte Holzpellets aus Weichholz verwendet wird.
